# FASCICULE DE BREVET EUROPEEN

(11) **EP 3 167 572 B1**
(45) Date de publication et mention de la délivrance du brevet: **19.12.2018**
(21) Numéro de dépôt: 15734389.8
(22) Date de dépôt: 07.07.2015
(51) Int. Cl.: H04L 12/28

(54) **PASSERELLE RÉSIDENTIELLE RELAIS ENTRE UN DISPOSITIF TERMINAL ET UN SERVEUR**
RELAIS EINES RESIDENTIAL-GATEWAYS ZWISCHEN EINER ENDGERÄTEVORRICHTUNG UND EINEM SERVER
RELAY RESIDENTIAL GATEWAY BETWEEN A TERMINAL DEVICE AND A SERVER

(30) Priorité: 11.07.2014 FR 1456691
(43) Date de publication de la demande: 17.05.2017
(73) Titulaire: SAGEMCOM BROADBAND SAS, 92500 Rueil-Malmaison (FR)
(72) Inventeur: DANGY-CAYE, Nicolas, F-92500 Rueil Malmaison (FR)
(74) Mandataire: Cabinet Le Guen Maillet
(86) Numéro de dépôt international: PCT/EP2015/065446
(87) Numéro de publication internationale: WO 2016/005371

(56) Documents cités:
- US-A1- 2008 273 547
- US-A1- 2011 295 102
- US-A1- 2012 185 268

## Description

La présente invention concerne des passerelles résidentielles utilisées comme relais de messages transmis par des dispositifs terminaux à destination d'un serveur de collecte dans le cadre de l'Internet des Objets.

L'Internet des Objets (« Internet of Things » en anglais) émerge. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple pour la collecte de relevés de consommations électriques ou de consommations d'eau. L'Internet des Objets est considéré comme la troisième évolution de l'Internet, baptisée Web 3.0. L'Internet des Objets est en partie responsable de l'accroissement actuel du volume de données à transmettre et à stocker, et est ainsi à l'origine de ce qu'on appelle le « Big Data ». L'Internet des Objets revêt un caractère universel pour désigner des objets connectés aux usages variés, par exemple dans le domaine de la e-santé ou de la domotique.

Une première approche adoptée pour interconnecter des objets, appelés objets communicants, dans le cadre de l'Internet des Objets, s'appuie sur un déploiement, maitrisé par un opérateur, de passerelles de collecte situées sur des points géographiquement hauts. Hors opérations de maintenance, ces passerelles sont fixes et permanentes. On peut par exemple citer sur ce modèle les réseaux SigFox ou ThingPark. Par exemple, en France, le réseau SigFox s'appuie sur les points hauts des sites de transmission de TDF (« Télédiffusion De France »). Ces passerelles de collecte communiquent avec les objets communicants grâce à des systèmes de communication radio moyenne ou longue portée (e.g. système LoRa de Semtech). Cette approche s'appuie sur un nombre limité de passerelles de collecte (difficulté de déploiement de nouvelles infrastructures réseau), ainsi que sur un accès montant (« uplink » en anglais) fiable et sécurisé avec un ou plusieurs serveurs de collecte. Cette première approche souffre de problèmes de zones blanches (c'est-à-dire de zones géographiques non couvertes, par exemple à cause de la topologie de terrain à proximité du point haut où est installée une passerelle de collecte), de charge (au niveau des passerelles de collecte et des serveurs), et de coûts d'exploitation.

Une seconde approche consiste à connecter des objets communicants au travers des passerelles résidentielles. On peut par exemple citer la technologie Energy Gateway, Un système selon la technologie Energy Gateway est composé de deux parties distinctes : d'une part, une passerelle résidentielle et des capteurs périphériques, qui sont hébergés chez le consommateur et qui permettent la collecte d'informations, la transmission de ces informations à un serveur de collecte, ainsi que le contrôle de déclenchement de diverses actions (contrôle de l'enclenchement des radiateurs ou du chauffe-eau par exemple) ; d'autre part, le serveur de collecte qui assure la mise à disposition des informations reçues et la transmission de commandes pour le contrôle de déclenchement de diverses actions. Ce serveur de collecte est accessible via l'Internet. Les technologies radio employées pour communiquer avec les objets communicants selon cette seconde approche sont de relative courte portée (par exemple de type Zigbee, Bluetooth ou Wi-Fi) pour desservir une collecte locale restreinte aux objets de l'habitat. Cette seconde approche souffre : d'un accès montant non fiable (accès via l'Internet) ne permettant pas une mise en place de services à haute qualité de service SLA (« Service Label Agreement » en anglais), et une couverture faible liée à la technologie radio utilisée pour connecter les objets communicants à la passerelle résidentielle. Il est concevable de doter des passerelles résidentielles avec des technologies radio de plus longue portée pour communiquer avec les objets communicants, comme celles utilisées dans le cadre de la première approche. Le déploiement du réseau serait ainsi facilité (par exemple en intégrant ces fonctionnalités dans la passerelle résidentielle associée au fournisseur d'accès à l'Internet), mais cela pose des problèmes de gestion réseau du fait de la densité potentielle de ces passerelles résidentielles (comparativement au déploiement des passerelles de collecte de la première approche) qui ferait qu'un même objet communiquant serait à portée d'un grand nombre de passerelles résidentielles, et le problème de fiabilité du lien montant (accès via l'Internet) persisterait.

Il est connu le document de brevet US 2011/0295102 A1, du domaine des systèmes sans-fil de capteurs médicaux, qui vise en particulier à fournir des moyens adaptés pour permettre à des capteurs portables, peu coûteux, et économes en énergie, de transmettre des données. À cette fin, il est divulgué un système sans-fil comportant une passerelle pour communiquer avec une pluralité de capteurs portables, la passerelle étant à son tour configurée pour communiquer, directement ou par l'intermédiaire d'un terminal mobile, avec un centre de données, un bureau médical ou une autre passerelle.

Il est aussi connu le document de brevet US 2008/273547 A1, qui traite de moyens pour accuser réception de transmissions dans un réseau de communication sans-fil, en particulier de moyens adaptés pour les réseaux dans lesquels les signaux sans-fil arrivent au récepteur à des instants légèrement différents, interférant les uns avec les autres.

Il est aussi connu le document de brevet US 2012/185268 A1, qui a trait notamment à un système de surveillance de patients comprenant des dispositifs médicaux et au moins un relais sans-fil pour coupler les dispositifs médicaux à un dispositif de surveillance distant.

Il est souhaitable de pallier ces inconvénients de l'état de la technique. Il est notamment souhaitable de fournir une solution qui permette d'assurer qu'un message transmis par un dispositif terminal, considéré comme un objet communicant au sens de l'Internet des Objets, soit effectivement relayé jusqu'à un serveur de collecte, tout en limitant la consommation de ressources réseau pour assurer un tel relais.

L'invention concerne un procédé de relais d'un message reçu par une passerelle résidentielle en provenance d'un dispositif terminal par voie radio, ladite passerelle résidentielle faisant partie d'un système de communication comportant une pluralité de passerelles résidentielles connectées à un serveur auquel est destiné ledit message. Le procédé est tel que ladite passerelle résidentielle effectue les étapes suivantes : déterminer si ledit dispositif terminal a été préalablement appairé avec ladite passerelle résidentielle ; lorsque ledit dispositif terminal a été préalablement appairé avec ladite passerelle résidentielle, transmettre par voie radio audit dispositif terminal un acquittement dudit message reçu et propager ledit message reçu à destination dudit serveur ; et lorsque ledit dispositif terminal n'a pas été préalablement appairé avec ladite passerelle résidentielle, activer une temporisation de durée prédéterminée à l'issue de laquelle, lorsqu'aucun acquittement dudit message par voie radio n'a été détecté, ladite passerelle résidentielle transmet par voie radio audit dispositif terminal un acquittement dudit message reçu et propage ledit message reçu à destination dudit serveur. Ainsi, le message transmis par le dispositif terminal est effectivement relayé jusqu'au serveur de collecte, tout en limitant la consommation de ressources réseau pour assurer ce relais puisque la temporisation assure que, lorsque ladite passerelle résidentielle n'est pas appairée avec ledit dispositif terminal, ladite passerelle résidentielle attend de voir si un acquittement (qui doit typiquement être envoyé par la passerelle résidentielle appairée avec ledit dispositif terminal) a été transmis avant de relayer elle-même ledit message.

Selon un mode de réalisation particulier, ladite passerelle résidentielle détermine aléatoirement la durée de ladite temporisation entre une borne inférieure et une borne supérieure, la borne inférieure définissant un laps de temps théorique maximum entre la réception par une passerelle résidentielle d'un message généré par un dispositif terminal et la transmission d'un acquittement dudit message par la passerelle résidentielle avec laquelle ledit dispositif terminal est appairé, la borne supérieure définissant un laps de temps théorique maximum entre la réception par une passerelle résidentielle d'un message généré par un dispositif terminal et la transmission d'un acquittement dudit message par une passerelle résidentielle avec laquelle ledit dispositif terminal n'est pas appairé. Ainsi, lorsque le message est reçu par une pluralité de passerelles résidentielles, ledit message n'est effectivement relayé qu'une seule fois, limitant ainsi la consommation de ressources réseau pour relayer ledit message jusqu'au serveur.

Selon un mode de réalisation particulier, ladite passerelle résidentielle initie une procédure d'envoi de sondes comportant les étapes suivantes : sélectionner un jeu de paramètres de transmission par voie radio parmi un ensemble prédéfini de jeux de paramètres de transmission par voie radio ; effectuer un envoi d'au moins une sonde en utilisant ledit jeu de paramètres de transmission sélectionné ; et réitérer l'envoi en utilisant un autre jeu de paramètres, jusqu'à ce que tout l'ensemble de jeux de paramètres de transmission par voie radio ait été utilisé, ou jusqu'à ce qu'un dispositif gestionnaire de connectivité n'interrompe ladite procédure d'envoi de sondes. Ainsi, la procédure d'envoi de sondes permet de tester tout un ensemble de jeux de paramètres de transmission, au moins jusqu'à ce que le dispositif gestionnaire de connectivité ait suffisamment d'éléments pour mener des actions de configuration en transmission qui s'imposent.

Selon un mode de réalisation particulier, ladite passerelle résidentielle déclenche la procédure d'envoi de sondes suite à une instruction en provenance d'un dispositif gestionnaire de connectivité du système de communication, ou ladite passerelle résidentielle déclenche périodiquement la procédure d'envoi de sondes, ou ladite passerelle résidentielle déclenche la procédure d'envoi de sondes suite à une phase de connexion de ladite passerelle résidentielle au serveur.

Selon un mode de réalisation particulier, suite à la procédure d'envoi de sondes, ladite passerelle résidentielle reçoit des paramètres de transmission par voie radio à faire appliquer à chaque dispositif terminal appairé à ladite passerelle résidentielle pour transmettre par voie radio des messages à destination dudit serveur. Ainsi, il est possible d'ajuster les paramètres de transmission par voie radio utilisés par des dispositifs terminaux appairés à ladite passerelle résidentielle de sorte que le nombre de passerelles résidentielles atteignables par voie radio soit suffisant pour assurer la redondance de chemins potentiels pour relayer ledit message au serveur et soit limité de sorte à éviter qu'un grand trop nombre de passerelles résidentielles ne tentent de relayer ledit message jusqu'au serveur.

Selon un mode de réalisation particulier, lesdits paramètres de transmission par voie radio sont des paramètres de puissance d'émission et/ou de facteur d'étalement.

Selon un mode de réalisation particulier, suite à une réception de sonde, ladite passerelle résidentielle effectue les étapes suivantes : déterminer une qualité de réception de ladite sonde ; déterminer des paramètres de transmission par voie radio qui ont été utilisés pour transmettre ladite sonde ; et transmettre à un dispositif gestionnaire de connectivité du système de communication, un rapport de qualité de transmission incluant des informations représentatives de la qualité de réception de ladite sonde et des paramètres de transmission par voie radio qui ont été utilisés pour transmettre ladite sonde. Ainsi, le dispositif gestionnaire de connectivité est capable de déterminer un niveau de qualité de transmission entre passerelles résidentielles en fonction de jeux de paramètres de transmission par voie radio.

Selon un mode de réalisation particulier, sur réception de rapports de qualité de transmission, le dispositif gestionnaire de connectivité du système de communication effectue les étapes suivantes : déterminer quel jeu de paramètres de transmission par voie radio utilisés par une passerelle résidentielle dans le cadre d'une procédure d'envoi de sondes permet à ladite passerelle résidentielle de communiquer avec un nombre d'autres passerelles résidentielles supérieur et au plus proche d'un nombre prédéfini de passerelles résidentielles ; et transmettre à ladite passerelle résidentielle le jeu déterminé de paramètres de transmission par voie radio de sorte à faire appliquer ledit jeu de paramètres à chaque dispositif terminal appairé avec ladite passerelle résidentielle. Ainsi, le dispositif gestionnaire de connectivité ajuste les paramètres de transmission par voie radio utilisés par des dispositifs terminaux de sorte que le nombre de passerelles résidentielles atteignables par voie radio soit suffisant pour assurer la redondance de chemins potentiels pour effectuer un relais de message jusqu'au serveur et soit limité de sorte à éviter qu'un grand trop nombre de passerelles résidentielles ne tentent de relayer un même message jusqu'au serveur.

Selon un mode de réalisation particulier, le dispositif gestionnaire de connectivité du système de communication détermine une cartographie de transmission représentative et, sur détection d'une déconnexion d'une passerelle résidentielle du système de communication, le dispositif gestionnaire de connectivité du système de communication effectue les étapes suivantes : sélectionner, d'après la cartographie de transmission, une passerelle résidentielle de remplacement temporaire pour remplacer temporairement en termes d'appairage ladite passerelle résidentielle déconnectée avec au moins un dispositif terminal déterminé ; et informer ladite passerelle résidentielle de remplacement temporaire de l'appairage temporaire avec chaque dispositif terminal déterminé. Ainsi, il est possible de pallier une déconnexion temporaire d'une passerelle résidentielle vis-à-vis des dispositifs terminaux qui lui sont appairés.

Selon un mode de réalisation particulier, sur détection d'une reconnexion au sein du système de communication de la passerelle résidentielle précédemment déconnectée, le dispositif gestionnaire de connectivité du système de communication annule l'appairage temporaire et en informe ladite passerelle résidentielle de remplacement temporaire.

L'invention concerne également une passerelle résidentielle adaptée pour agir comme relais d'un message reçu en provenance d'un dispositif terminal par voie radio, ladite passerelle résidentielle étant destinée à faire partie d'un système de communication comportant une pluralité de passerelles résidentielles connectées à un serveur auquel est destiné ledit message. Ladite passerelle résidentielle est telle qu'elle comporte : des premiers moyens pour déterminer si ledit dispositif terminal a été préalablement appairé avec ladite passerelle résidentielle ; des seconds moyens pour transmettre par voie radio audit dispositif terminal un acquittement dudit message reçu et propager ledit message reçu à destination dudit serveur ; et des troisièmes moyens pour activer une temporisation de durée prédéterminée sur réception dudit message. Ladite passerelle résidentielle est en outre telle que lesdits troisièmes moyens sont activés lorsque ledit dispositif terminal n'a pas été préalablement appairé avec ladite passerelle résidentielle, et que lesdits seconds moyens sont activés lorsque ledit dispositif terminal a été préalablement appairé avec ladite passerelle résidentielle, et aussi lorsqu'aucun acquittement dudit message par voie radio n'a été détecté à l'issue de ladite temporisation.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication dans lequel la présente invention peut être mise en oeuvre ;
- la Fig. 2 illustre schématiquement un exemple d'architecture matérielle d'une passerelle résidentielle et/ou d'un dispositif gestionnaire de connectivité du système de communication de la Fig. 1 ;
- la Fig. 3 illustre schématiquement un algorithme, mis en oeuvre par au moins une passerelle résidentielle du système de communication de la Fig. 1, pour traiter des messages en provenance d'un dispositif terminal et à destination du serveur ;
- la Fig. 4 illustre schématiquement un algorithme, mis en oeuvre par au moins une passerelle résidentielle du système de communication de la Fig. 1, pour initier un mécanisme d'ajustement en transmission d'au moins un dispositif terminal ;
- la Fig. 5 illustre schématiquement un algorithme, mis en oeuvre par au moins une passerelle résidentielle du système de communication de la Fig. 1, pour mettre en oeuvre le mécanisme d'ajustement en transmission d'au moins un dispositif terminal ;
- la Fig. 6 illustre schématiquement un algorithme, mis en oeuvre par le dispositif gestionnaire de connectivité du système de communication de la Fig. 1, pour ajuster en transmission au moins un dispositif terminal ;
- la Fig. 7 illustre schématiquement un algorithme, mis en oeuvre par le dispositif gestionnaire de connectivité du système de communication de la Fig. 1, pour réaliser un appairage temporaire entre au moins un dispositif terminal et une passerelle résidentielle du système de communication de la Fig. 1 ; et
- la Fig. 8 illustre schématiquement un algorithme, mis en oeuvre par le dispositif gestionnaire de connectivité du système de communication de la Fig. 1, pour annuler un appairage temporaire entre au moins un dispositif terminal et une passerelle résidentielle du système de communication de la Fig. 1.

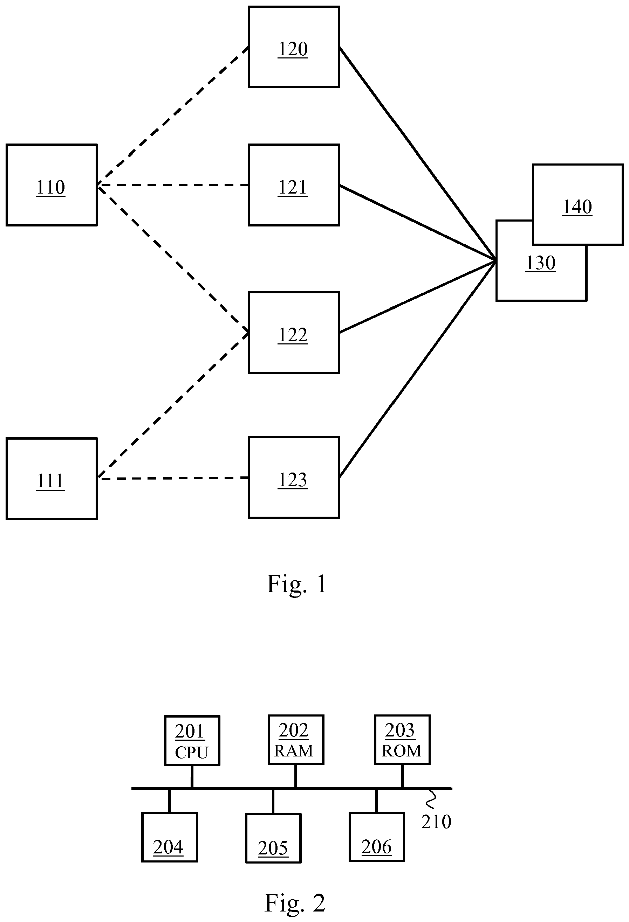

La Fig. 1 illustre schématiquement un système de communication dans lequel la présente invention peut être mise en oeuvre.

Le système de communication comporte une pluralité de passerelles résidentielles 120, 121, 122, 123. Chaque passerelle résidentielle 120, 121, 122, 123 dispose d'un lien de communication respectif avec un serveur 130. Selon un mode de réalisation particulier, chaque passerelle résidentielle 120, 121, 122, 123 intègre une fonction d'accès à l'Internet et le lien de communication entre ladite passerelle résidentielle avec le serveur 130 repose sur le protocole IP (« Internet Protocol » en anglais, tel que défini dans le document normatif RFC 791).

Chaque passerelle résidentielle 120, 121, 122, 123 dispose d'au moins une interface radio permettant à ladite passerelle résidentielle de communiquer avec au moins un dispositif terminal 110, 111. Ladite interface radio est par exemple conforme au système LoRa de Semtech. Ladite interface radio est, selon un autre exemple, de type Wi-Fi. Ladite interface radio est telle qu'un dispositif terminal peut être à portée de communication par voie radio d'une pluralité de passerelles résidentielles.

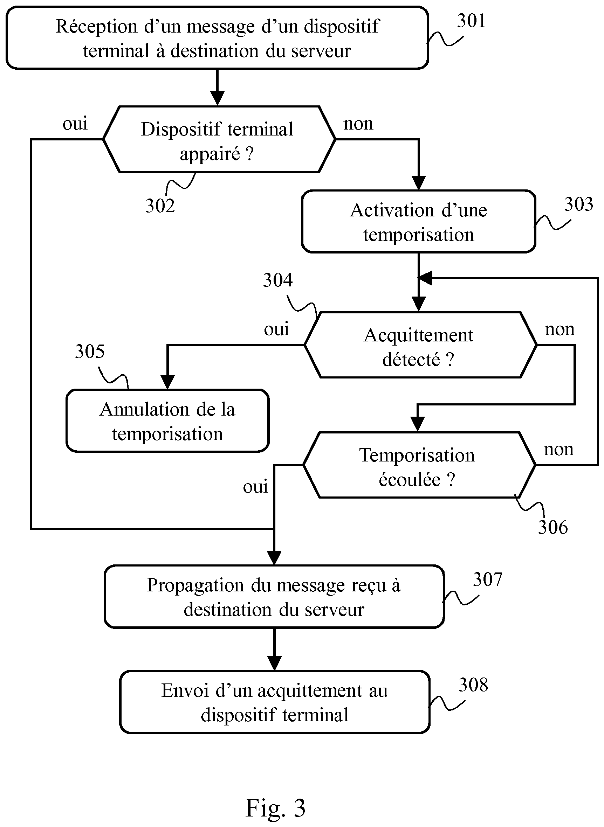

Dans le système de communication, des messages doivent être remontés de chaque dispositif terminal 110, 111 jusqu'au serveur 130. Le serveur 130 a un rôle de collecte d'informations disponibles auprès des dispositifs terminaux 110, 111. Les passerelles résidentielles 120, 121, 122, 123 ont un rôle de relais entre les dispositifs terminaux 110, 111 et le serveur 130. Par exemple, sur la Fig. 1, les passerelles résidentielles 120, 121, 122 sont à portée de communication radio du dispositif pont 110 et peuvent servir de relais pour des messages générés par le dispositif terminal 110 à destination du serveur 130, et les passerelles résidentielles 122, 123 sont à portée de communication radio du dispositif pont 111 et peuvent servir de relais pour des messages générés par le dispositif terminal 111 à destination du serveur 130. Le comportement des passerelles résidentielles 120, 121, 122, 123 vis-à-vis de messages générés par les dispositifs terminaux 110, 111 à destination du serveur 130 est détaillé ci-après en relation avec la Fig. 3.

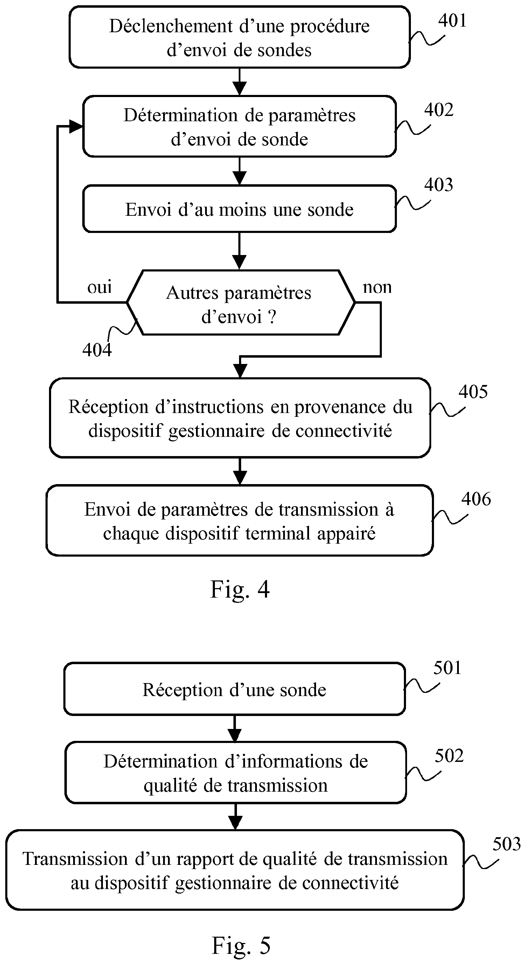

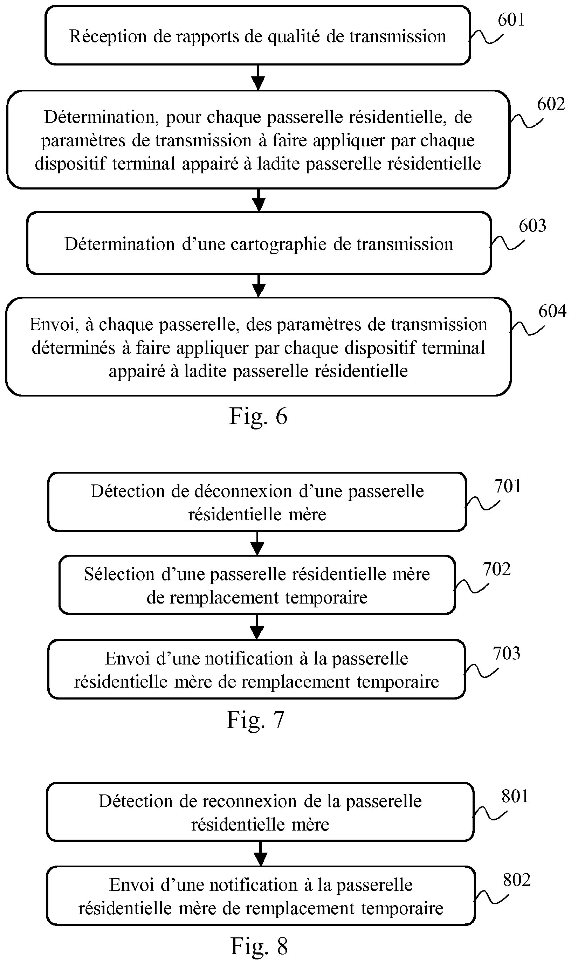

Le système de communication comporte préférentiellement un dispositif gestionnaire de connectivité 140 en charge de déterminer des paramètres de transmission par voie radio à faire appliquer aux dispositifs terminaux 110, 111 en fonction d'une cartographie de transmission représentative de la connectivité au sein du système de communication de la Fig. 1. Ces paramètres de transmission par voie radio définissent la portée de communication radio desdits dispositifs terminaux 110, 111, et sont préférentiellement des paramètres représentatifs d'une puissance d'émission P et/ou d'un facteur d'étalement SF (« Spreading Factor » en anglais). Pour permettre ainsi d'ajuster la quantité de passerelles résidentielles pouvant intervenir dans le relais de messages générés par chaque dispositif terminal 110, 111 à destination du serveur 130, la cartographie de transmission est établie par le dispositif gestionnaire de connectivité 140 par l'intermédiaire d'envois de sondes. Le comportement des passerelles résidentielles 120, 121, 122, 123 vis-à-vis de l'envoi desdites sondes est détaillé ci-après en relation avec la Fig. 4. Le comportement des passerelles résidentielles 120, 121, 122, 123 vis-à-vis de la réception desdites sondes est détaillé ci-après en relation avec la Fig. 5. Le comportement du dispositif gestionnaire de connectivité 140 pour générer la cartographie de transmission est détaillé ci-après en relation avec la Fig. 6.

Le dispositif gestionnaire de connectivité 140 peut être inclus dans le serveur 130. Le dispositif gestionnaire de connectivité 140 peut être distinct du serveur 130 et chaque passerelle résidentielle 120, 121, 122, 123 dispose d'un lien de communication avec le dispositif gestionnaire de connectivité 140.

Les fonctionnalités du dispositif gestionnaire de connectivité 140 peuvent aussi être distribuées entre les passerelles résidentielles 120, 121, 122, 123. En d'autres termes, chacune des passerelles résidentielles 120, 121, 122, 123 définit elle-même les paramètres de transmission par voie radio à faire appliquer à chaque dispositif terminal qui lui est appairé, en fonction d'une représentation partielle de la cartographie de transmission.

Pour assurer le relais des messages générés par les dispositifs terminaux 110, 111 à destination du serveur 130 tout en évitant des redondances inutiles de message, des dispositifs terminaux sont appairés avec des passerelles résidentielles respectives. On dit alors que la passerelle résidentielle est une passerelle résidentielle *mère* vis-à-vis dudit dispositif terminal, et que le dispositif terminal est un dispositif terminal *enfant* vis-à-vis de ladite passerelle résidentielle. Comme détaillé ci-après en relation avec la Fig. 3, le comportement de chaque passerelle résidentielle 120, 121, 122, 123 vis-à-vis de messages reçus en provenance d'un dispositif terminal dépend du fait que ladite passerelle résidentielle est appairée ou non avec ledit dispositif terminal. Un appairage par défaut est préalablement réalisé entre chaque dispositif terminal 110, 111 et une passerelle résidentielle. Lorsqu'une passerelle résidentielle établit une connexion avec le serveur 130, ladite passerelle résidentielle informe le serveur 130 et/ou le dispositif gestionnaire de connectivité 140 de chaque dispositif terminal qui lui est appairé. Si un changement d'appairage survient alors que la connexion avec le serveur 130 est établie, ladite passerelle résidentielle en informe le serveur 130 et/ou le dispositif gestionnaire de connectivité 140. Cela permet notamment au dispositif gestionnaire de connectivité 140 de choisir au besoin des passerelles résidentielles mères de remplacement temporaire, comme décrit par la suite en relation avec les Figs. 7 et 8. En effet, dans un mode de réalisation particulier, en cas de détection d'anomalie de communication avec ladite passerelle résidentielle, le dispositif gestionnaire de connectivité 140 sélectionne pour chaque dispositif terminal enfant concerné une passerelle résidentielle de remplacement temporaire. Considérons par la suite que le dispositif terminal 110 est préalablement appairé avec la passerelle résidentielle 120 et que le dispositif terminal 111 est préalablement appairé avec la passerelle résidentielle 122.

L'appairage entre chaque dispositif terminal 110, 111 et une passerelle résidentielle peut être préalablement réalisé en usine, par exemple lorsque ladite passerelle résidentielle est fournie sous forme de lot avec un ou plusieurs dispositifs terminaux. Cet appairage peut aussi être dynamiquement réalisé par un utilisateur ou un installateur de ladite passerelle résidentielle. Par exemple, par appui sur un bouton du dispositif terminal et sur un bouton de ladite passerelle résidentielle, ledit dispositif terminal et ladite passerelle résidentielle échangent des messages menant à l'appairage, selon un principe similaire à la méthode PBM(« Push-Button-Method » en anglais) mise en oeuvre dans le cadre du standard WPS (« Wi-Fi Protected Setup » en anglais). D'autres méthodes d'appairage peuvent être mises en oeuvre, comme par exemple la saisie d'un numéro de série du dispositif terminal auprès de ladite passerelle résidentielle ou la lecture d'un code à barres représentant ledit numéro de série, ce numéro de série étant ensuite notifié par ledit dispositif terminal dans chaque message généré par ledit dispositif terminal.

La Fig. 2 illustre schématiquement un exemple d'architecture matérielle d'une passerelle résidentielle du système de communication de la Fig. 1 et/ou du dispositif gestionnaire de connectivité 140. Considérons que la Fig. 2 représente une architecture matérielle de la passerelle résidentielle 122. La passerelle résidentielle 122 comporte alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ou un disque dur HDD (« Hard Disk Drive » en anglais) ; une première interface de communication 205 permettant de connecter la passerelle résidentielle 122 à un ou plusieurs dispositifs terminaux ; et une seconde interface de communication 206 permettant de connecter la passerelle résidentielle 122 au serveur 130 et préférentiellement au dispositif gestionnaire de connectivité 140.

Le processeur 201 est capable d'exécuter des instructions chargées dans la RAM 202 à partir de la ROM 203, d'une mémoire externe, d'un support de stockage, ou d'un réseau de communication. Lorsque la passerelle résidentielle 122 est mise sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ici en relation avec la passerelle résidentielle 122 (respectivement en relation avec le dispositif gestionnaire de connectivité 140).

Ainsi, tout ou partie des algorithmes et étapes décrits ici peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

Le serveur 130 et/ou les dispositifs terminaux 110, 111 peuvent être construits sur la base d'une architecture similaire à celle présentée à la Fig. 2.

La Fig. 3 illustre schématiquement un algorithme, mis en oeuvre par au moins une passerelle résidentielle du système de communication de la Fig. 1, pour traiter des messages en provenance d'un dispositif terminal et à destination du serveur 130. Considérons à titre illustratif que l'algorithme de la Fig. 3 est mis en oeuvre par la passerelle résidentielle 122.

Dans une étape 301, la passerelle résidentielle 122 reçoit un message en provenance d'un dispositif terminal et à destination du serveur 130. En se référant à la Fig. 1, la passerelle résidentielle 122 est à portée de communication du dispositif terminal 110 et du dispositif terminal 111. Le message reçu peut alors avoir été généré par le dispositif terminal 110 ou par le dispositif terminal 111.

Dans une étape 302 suivante, la passerelle résidentielle 122 détermine si le dispositif terminal ayant généré le message reçu à l'étape 301 est appairé (que ce soit un appairage préalable ou un appairage temporaire) avec ladite passerelle résidentielle. Si tel est le cas, une étape 307 est effectuée ; sinon, une étape 303 est effectuée. Lorsque l'algorithme de la Fig. 3 est mis en oeuvre par la passerelle résidentielle 122 vis-à-vis d'un message reçu en provenance du dispositif terminal 111 qui a été préalablement appairé avec la passerelle résidentielle 122, la passerelle résidentielle 122 effectue donc l'étape 307. Lorsque l'algorithme de la Fig. 3 est mis en oeuvre par la passerelle résidentielle 122 vis-à-vis d'un message reçu en provenance du dispositif terminal 110 qui a été préalablement appairé avec la passerelle résidentielle 120, la passerelle résidentielle 122 effectue donc l'étape 303.

Dans l'étape 303, la passerelle résidentielle 122 active une temporisation d'une durée prédéterminée. La durée de ladite temporisation peut être prédéfinie, par exemple en usine, et potentiellement commune à l'ensemble des passerelles résidentielles du système de communication de la Fig. 1. La durée de ladite temporisation peut être dynamiquement déterminée par la passerelle résidentielle 122 de manière aléatoire entre une borne inférieure et une borne supérieure. La borne inférieure définit un laps de temps théorique maximum entre la réception par une passerelle résidentielle d'un message généré par un dispositif terminal et la transmission d'un acquittement dudit message, à destination dudit dispositif terminal, par la passerelle résidentielle avec laquelle ledit dispositif terminal est appairé. La borne supérieure définit le laps de temps théorique maximum entre la réception par une passerelle résidentielle d'un message généré par un dispositif terminal et la transmission d'un acquittement dudit message, à destination dudit dispositif terminal, par une passerelle résidentielle avec laquelle ledit dispositif terminal n'est pas appairé. Comme détaillé ci-après, lorsque les passerelles résidentielles du système de communication de la Fig. 1 déterminent aléatoirement la durée de ladite temporisation, cela permet de limiter des redondances inutiles de messages à destination du serveur 130. La consommation de bande passante à destination du serveur 130 s'en trouve améliorée.

Dans une étape 304 suivante, la passerelle résidentielle 122 vérifie si la passerelle résidentielle 122 a détecté une transmission d'un acquittement du message reçu à l'étape 301. Cet acquittement est supposé, en fonctionnement nominal, être transmis par la passerelle résidentielle 120 à laquelle est appairé le dispositif terminal 110. Cet acquittement peut être envoyé par une passerelle résidentielle ayant suppléé la passerelle résidentielle 120 dans son rôle de relais vers le serveur 130. Si la passerelle résidentielle 122 a détecté une transmission d'un tel acquittement, une étape 305 est effectuée ; sinon, une étape 306 est effectuée.

Dans l'étape 305, la passerelle résidentielle 122 annule la temporisation activée à l'étape 303, et il est mis fin à l'algorithme de la Fig. 3 jusqu'à réception d'un autre message en provenance d'un dispositif terminal et à destination du serveur 130. Cela signifie que le message reçu à l'étape 301 est considéré relayé jusqu'au serveur 130, par une autre passerelle résidentielle que la passerelle résidentielle 122.

Dans l'étape 306, la passerelle résidentielle 122 vérifie si la temporisation activée à l'étape 303 est écoulée. Si tel est le cas, l'étape 307 est effectuée ; sinon, l'étape 304 est réitérée.

Dans l'étape 307, la passerelle résidentielle 122 propage, à destination du serveur 130, le message reçu à l'étape 301. La passerelle résidentielle 122 fournit alors préférentiellement au serveur 130 une indication selon laquelle la passerelle résidentielle 122 a propagé ledit message, afin de permettre au serveur 130 de déceler si ledit message a ou non été relayé par la passerelle résidentielle avec laquelle est appairé ledit dispositif terminal.

Dans une étape 308, la passerelle résidentielle 122 envoie, audit dispositif terminal, un acquittement dudit message reçu à l'étape 301, puis il est mis fin à l'algorithme de la Fig. 3. En d'autres termes, l'acquittement dudit message reçu à l'étape 301 est supposé être envoyé par la passerelle résidentielle à laquelle est appairé ledit dispositif terminal et si une durée prédéterminée est écoulée sans transmission dudit acquittement, une autre passerelle résidentielle à portée de communication dudit dispositif terminal prend le rôle de relais dudit message jusqu'au serveur 130. Selon la durée de temporisation utilisée par chaque autre passerelle résidentielle à portée de communication dudit dispositif terminal, ledit message peut être relayé plusieurs fois jusqu'au serveur 130. Utiliser une définition aléatoire de cette durée de temporisation permet de limiter, voire d'éviter, que ledit message ne soit relayé plusieurs fois jusqu'au serveur 130 et/ou que ledit dispositif terminal ne reçoive plusieurs acquittements vis-à-vis dudit message.

Implémenter ce procédé de réaction à une absence d'acquittement au sein des passerelles résidentielles permet d'utiliser des dispositifs terminaux simples qui ne cherchent pas à déterminer d'eux-mêmes comment assurer le relais de leurs messages à destination du serveur 130. En effet, dans le cas de capteurs destinés à un usage domestique (*e*.*g* détecteur de fumée, détecteur d'intrusion...), ces dispositifs terminaux doivent rester d'implémentation simple.

Il convient de noter que les étapes 307 et 308 peuvent être inversées. Il convient aussi de noter que la passerelle résidentielle 122 peut effectuer l'étape 308 après avoir reçu, en provenance du serveur 130, une instruction correspondante. Ainsi, lorsque ledit message est relayé plusieurs fois jusqu'au serveur 130, le serveur 130 choisit une passerelle résidentielle, parmi celles ayant relayé ledit message, pour transmettre l'acquittement audit dispositif terminal et instruit ladite passerelle résidentielle choisie de transmettre l'acquittement audit dispositif terminal. Le dispositif terminal ne reçoit alors qu'un seul acquittement vis-à-vis dudit message. De plus, cela permet d'assurer que le serveur 130 a effectivement reçu le message lorsque les connexions respectivement établies entre les passerelles résidentielles et le serveur 130 ne sont pas fiables. Lorsque l'acquittement est envoyé sans attendre de confirmation de la part du serveur 130, cela permet au système de communication de s'affranchir d'un temps variable d'aller-retour RTT (« Round-trip Time » en anglais) entre les passerelles résidentielles et le serveur 130.

La Fig. 4 illustre schématiquement un algorithme, mis en oeuvre par au moins une passerelle résidentielle du système de communication de la Fig. 1, pour initier un mécanisme d'ajustement en transmission d'au moins un dispositif terminal appairé avec ladite passerelle résidentielle. Considérons à titre illustratif que l'algorithme de la Fig. 4 est mis en oeuvre par la passerelle résidentielle 122.

Dans une étape 401, la passerelle résidentielle 122 déclenche une procédure d'envoi de sondes. De telles sondes sont des messages de test destinés à être diffusés par la passerelle résidentielle 122 à destination d'autres passerelles résidentielles du système de communication de la Fig. 1. Le déclenchement de la procédure d'envoi de sondes peut faire suite à une instruction en provenance du dispositif gestionnaire de connectivité 140 désireux de construire la cartographie de transmission ou de vérifier la pertinence d'une version précédemment construite de la cartographie de transmission. Le déclenchement de la procédure d'envoi de sondes peut aussi être périodique. Le déclenchement de la procédure d'envoi de sondes peut aussi faire suite à une phase de connexion de la passerelle résidentielle 122 au serveur 130, par exemple lors d'une phase plus générale d'initialisation de la passerelle résidentielle 122.

Dans une étape 402 suivante, la passerelle résidentielle 122 détermine des paramètres de transmission par voie radio de sonde définissant la portée de communication de la passerelle résidentielle 122 dans ce contexte. Ces paramètres sont préférentiellement représentatifs d'une puissance d'émission P et/ou d'un facteur d'étalement SF. Le principe de l'algorithme de la Fig. 4 est de faire tester par la passerelle résidentielle 122 un ensemble prédéfini de jeux de paramètres de transmission qui définissent des portées respectives de communication par voie radio. Dans l'étape 402, la passerelle résidentielle 122 sélectionne donc un jeu de paramètres de transmission parmi ledit ensemble.

Dans une étape 403 suivante, la passerelle résidentielle 122 envoie au moins une sonde en appliquant les paramètres de transmission déterminés à l'étape 402. Pour ce faire, la passerelle résidentielle 122 utilise la même interface de communication radio que celle utilisée pour communiquer avec les dispositifs terminaux. Lorsqu'une autre passerelle résidentielle du système de communication de la Fig. 1 reçoit une ou plusieurs de ces sondes, ladite autre passerelle résidentielle génère un rapport de qualité de transmission à destination du dispositif gestionnaire de connectivité 140, tel que décrit ci-après en relation avec la Fig. 5. Chaque sonde envoyée contient préférentiellement une information représentative des paramètres de transmission par voie radio utilisés par la passerelle résidentielle 122, plus particulièrement lorsque lesdits paramètres sont représentatifs d'une puissance d'émission P. En effet, lorsque lesdits paramètres sont représentatifs d'un facteur d'étalement SF, ledit facteur d'étalement peut être intrinsèquement déterminé par ladite autre passerelle résidentielle sans que la passerelle résidentielle 122 n'ait indiqué le facteur d'étalement SF utilisé pour l'envoi de ladite sonde.

Dans une étape 404 suivante, la passerelle résidentielle 122 détermine s'il existe d'autres paramètres de transmission par voie radio à tester. En d'autres termes, la passerelle résidentielle 122 détermine si au moins un jeu de paramètres de transmission par voie radio reste à être testé parmi l'ensemble de jeux de paramètres de transmission par voie radio. Si tel est le cas, l'étape 402 est réitérée avec un jeu de paramètres de transmission par voie radio qui n'a pas encore été testé ; sinon, une étape 405 est effectuée.

Par exemple, la passerelle résidentielle 122 parcourt l'ensemble prédéfini de jeux de paramètres de transmission de sorte à augmenter, au fil des exécutions de l'étape 402, la portée des transmissions par voie radio. Selon un autre exemple, la passerelle résidentielle 122 parcourt l'ensemble prédéfini de jeux de paramètres de transmission de sorte à diminuer, au fil des exécutions de l'étape 402, la portée des transmissions par voie radio.

Dans l'étape 405, la passerelle résidentielle 122 met fin à la procédure d'envoi de sondes. La passerelle résidentielle 122 se met en attente d'instructions en provenance du dispositif gestionnaire de connectivité 140, et reçoit lesdites instructions de la part du dispositif gestionnaire de connectivité 140. La définition et la transmission de ces instructions par le dispositif gestionnaire de connectivité 140 sont décrites ci-après en relation avec la Fig. 6. Ces instructions concernent le paramétrage en transmission de chaque dispositif terminal appairé à la passerelle résidentielle 122, dès lors que ledit dispositif terminal est capable d'ajuster les paramètres de transmission que ledit dispositif terminal utilise pour transmettre par voie radio des messages à destination du serveur 130.

Dans une étape 406 suivante, la passerelle résidentielle 122 exécute les instructions reçues à l'étape 405 en provenance du dispositif gestionnaire de connectivité 140, et envoie ainsi, à chaque dispositif terminal appairé avec la passerelle résidentielle 122, des paramètres de transmission à appliquer pour transmettre par voie radio des messages à destination du serveur 130. Comme précédemment, ces paramètres de transmission sont préférentiellement représentatifs d'une puissance d'émission P et/ou d'un facteur d'étalement SF. Il est ensuite mis fin à l'algorithme de la Fig. 4. La passerelle résidentielle 122 peut différer la mise à jour des paramètres de transmission auprès des dispositifs terminaux qui lui sont appairés. La passerelle résidentielle 122 peut notamment profiter d'un échange de messages ultérieur entre un dispositif terminal qui lui est appairé et ladite passerelle résidentielle 122. Cela peut permettre d'éviter de sortir ledit dispositif terminal d'un mode veille pour uniquement faire appliquer de nouveaux paramètres de transmission, et ainsi d'économiser des ressources énergétiques du point de vue dudit dispositif terminal, ce qui est particulièrement avantageux lorsque ledit dispositif terminal est alimenté par pile(s) ou batterie(s) (*e*.*g*. capteur,...). La passerelle résidentielle 122 peut aussi faire appliquer les paramètres de transmission reçus du dispositif gestionnaire de connectivité 140 lors de phases ultérieures d'appairage avec des dispositifs terminaux, que ce soit pour des dispositifs terminaux pour lesquels ladite passerelle résidentielle 122 devient la passerelle résidentielle mère par défaut ou pour lesquels ladite passerelle résidentielle 122 prend un rôle de passerelle résidentielle mère de remplacement temporaire.

La procédure d'envoi de sondes décrite ci-dessus dans le cadre de l'algorithme de la Fig. 4 prévoit de tester tout un ensemble de paramètres de transmission. Il est toutefois possible que le dispositif gestionnaire de connectivité 140 dispose de suffisamment d'éléments, via des rapports de qualité de transmission générés comme décrit ci-après en relation avec la Fig. 5, pour prendre une décision quant au paramétrage de transmission à appliquer, bien que ledit ensemble de paramètres de transmission n'ait pas encore été complètement testé. Le dispositif gestionnaire de connectivité 140 peut alors envoyer un message à la passerelle résidentielle concernée afin d'interrompre la procédure d'envoi de sondes.

La Fig. 5 illustre schématiquement un algorithme, mis en oeuvre par au moins une passerelle résidentielle du système de communication de la Fig. 1, pour mettre en oeuvre un mécanisme d'ajustement en transmission d'au moins un dispositif terminal. Considérons à titre illustratif que l'algorithme de la Fig. 5 est mis en oeuvre par la passerelle résidentielle 122.

Dans une étape 501, la passerelle résidentielle 122 reçoit une sonde. Pour ce faire, la passerelle résidentielle 122 utilise la même interface de communication radio que celle utilisée pour communiquer avec les dispositifs terminaux. Une telle sonde a été émise par une autre passerelle résidentielle dans le cadre de la procédure d'envoi de sondes précédemment décrite en relation avec la Fig. 4.

Dans une étape 502 suivante, la passerelle résidentielle 122 détermine des informations représentatives d'une qualité de transmission de ladite sonde. Ces informations sont par exemple représentatives d'un niveau de puissance de signal reçu RSSI (« Received Signal Strength Indication » en anglais) ou un taux de perte de données (*e.g.* la passerelle résidentielle 122 s'attend à recevoir une quantité prédéterminée de sondes par jeu de paramètres de transmission par voie radio et le compare avec une quantité de sondes effectivement reçues pour ce jeu de paramètres de transmission par voie radio).

Dans une étape 503 suivante, la passerelle résidentielle 122 génère un rapport de qualité de transmission et transmet ledit rapport généré au dispositif gestionnaire de connectivité 140. Ledit rapport transmis inclut une information représentative de la passerelle résidentielle ayant transmis la ou les sondes reçues, une information représentative de la passerelle résidentielle 122 ayant généré ledit rapport, une information représentative du jeu de paramètres de transmission utilisé pour l'envoi par voie radio de chaque sonde, et une information représentative de ladite qualité de transmission pour ledit jeu de paramètres de transmission par voie radio. Il est ensuite mis fin à l'algorithme de la Fig. 5.

La Fig. 6 illustre schématiquement un algorithme, mis en oeuvre par le dispositif gestionnaire de connectivité 140, pour ajuster en transmission au moins un dispositif terminal.

Dans une étape 601, le dispositif gestionnaire de connectivité 140 reçoit au moins un rapport de qualité de transmission relatif à une procédure d'envoi de sondes initiée par une passerelle résidentielle du système de communication de la Fig. 1, telle que précédemment décrite en relation avec la Fig. 4. Chaque rapport de qualité de transmission est émis par une autre passerelle résidentielle du système de communication de la Fig. 1 ayant reçu au moins une sonde émise dans le cadre de ladite procédure d'envoi de sondes. A partir de tels rapports de qualité de transmission, le dispositif gestionnaire de connectivité 140 est capable de déterminer, pour chaque jeu de paramètres de transmission par voie radio utilisé par une passerelle résidentielle dans le cadre d'une procédure d'envoi de sondes, quelle autre passerelle résidentielle est à portée de communication de ladite passerelle résidentielle.

Dans une étape 602 suivante, le dispositif gestionnaire de connectivité 140 détermine, pour chaque passerelle résidentielle ayant initié une telle procédure d'envoi de sondes, des paramètres de transmission à faire appliquer par chaque dispositif terminal appairé à ladite passerelle résidentielle, dès lors que ledit dispositif terminal est capable d'ajuster les paramètres de transmission que ledit dispositif terminal utilise pour transmettre par voie radio des messages à destination du serveur 130. Comme déjà mentionné, ces paramètres définissent la portée de communication par voie radio des dispositifs terminaux, et sont préférentiellement des paramètres représentatifs d'une puissance d'émission P et/ou d'un facteur d'étalement SF.

Les paramètres de transmission par voie radio à faire appliquer par chaque dispositif terminal appairé à ladite passerelle résidentielle sont tels qu'un nombre prédéfini N d'autres passerelles résidentielles est à portée de communication par voie radio de ladite passerelle résidentielle ayant initié la procédure d'envoi de sondes. Il est rappelé que la procédure d'envoi de sondes s'appuie sur les mêmes interfaces de communication radio que celles respectivement utilisées par les passerelles résidentielles du système de communication de la Fig. 1 pour communiquer avec les dispositifs terminaux. La position géographique des dispositifs terminaux appairés avec une passerelle résidentielle du système de communication de la Fig. 1 et la position géographique de ladite passerelle résidentielle sont considérées suffisamment proches pour que les paramètres de transmission utilisés par ladite passerelle résidentielle lors d'une procédure d'envoi de sondes puissent être appliqués par lesdits dispositifs terminaux pour obtenir une portée de communication par voie radio substantiellement identique vis-à-vis des autres passerelles résidentielles du système de communication de la Fig. 1. Le dispositif gestionnaire de connectivité 140 peut toutefois appliquer un facteur correctif aux paramètres de transmission par voie radio utilisés par ladite passerelle résidentielle lors de la procédure d'envoi de sondes, pour déterminer les paramètres de transmission par voie radio à faire appliquer par chaque dispositif terminal appairé à ladite passerelle résidentielle, ledit facteur correctif visant à prendre en compte une différence de position géographique entre ladite passerelle résidentielle et les dispositifs terminaux qui lui sont appairés.

En d'autres termes, le dispositif gestionnaire de connectivité 140 est capable de déterminer, à partir des rapports de qualité de transmission reçus suite à une procédure d'envoi de sondes initiée par une passerelle résidentielle, quels paramètres de transmission permettent d'atteindre par voie radio le nombre prédéfini N d'autres passerelles résidentielles. Le dispositif gestionnaire de connectivité 140 cherche à sélectionner le jeu de paramètres de transmission pour lequel ladite passerelle résidentielle est capable d'atteindre par voie radio un nombre N' d'autres passerelles résidentielles au plus proche du nombre N, N' étant préférentiellement égal à N ou, à défaut, supérieur à N. Utiliser des paramètres de transmission par voie radio au plus proche du nombre N permet d'assurer la redondance nécessaire à la fiabilisation du relais de messages jusqu'au serveur 130, tout en limitant le nombre de passerelles résidentielles agissant de manière concurrente vis-à-vis desdits messages. De plus, cela permet de limiter la consommation énergétique des dispositifs terminaux, ce qui augmente leur durée de service lorsque lesdits dispositifs terminaux fonctionnent sur pile(s) ou batterie(s). Cela permet aussi de diminuer les interférences et la pollution radio.

Si aucun jeu de paramètres de transmission ne permet à ladite passerelle résidentielle d'atteindre par voie radio le nombre prédéfini N d'autres passerelles résidentielles, le jeu de paramètres de transmission de portée maximum par voie radio est retenu.

Dans une étape 603 suivante, le dispositif gestionnaire de connectivité 140 détermine la cartographie de transmission applicable aux passerelles résidentielles du système de communication de la Fig. 1 en fonction des paramètres de transmission retenus à l'étape 602. La cartographie de transmission représente, en fonction des paramètres de transmission retenus vis-à-vis de chaque passerelle résidentielle du système de communication de la Fig. 1 et donc de chaque dispositif terminal appairé à chaque dite passerelle résidentielle, la connectivité du système de communication de la Fig. 1, c'est-à-dire les capacités de communication au sein du système de communication de la Fig. 1.

Cette cartographie de transmission permet au dispositif gestionnaire de connectivité 140 de détecter d'éventuels besoins de déclencher des procédures d'envoi de sondes et/ou d'éventuels besoins de sélectionner des passerelles résidentielles mères de remplacement temporaire et/ou d'éventuels besoins d'annuler des sélections de passerelles résidentielles mères de remplacement temporaire, en fonction de détection de déconnexion ou de reconnexion de passerelles résidentielles et/ou de changements de conditions de transmission au sein du système de communication de la Fig. 1.

Dans une étape 604 suivante, le dispositif gestionnaire de connectivité 140 transmet, à la passerelle résidentielle ayant initié la procédure d'envoi de sondes à l'origine des rapports de qualité de transmission reçus, les paramètres de transmission retenus à l'étape 602 et ayant conduit à la cartographie de transmission déterminée à l'étape 603, de manière à faire appliquer lesdits paramètres de transmission par voie radio à chaque dispositif terminal appairé à ladite passerelle résidentielle. Il est alors mis fin à l'algorithme de la Fig. 6.

La Fig. 7 illustre schématiquement un algorithme, mis en oeuvre par le dispositif gestionnaire de connectivité 140, pour réaliser un appairage temporaire entre au moins un dispositif terminal et une passerelle résidentielle du système de communication de la Fig. 1.

Dans une étape 701, le dispositif gestionnaire de connectivité 140 détecte une déconnexion d'une passerelle résidentielle du système de communication de la Fig. 1. Par exemple, pour pouvoir relayer des messages entre des dispositifs terminaux et le serveur 130, chaque passerelle résidentielle du système de communication de la Fig. 1 établit une connexion avec le serveur 130, et lorsque cette connexion est rompue, le serveur 130 en informe le dispositif gestionnaire de connectivité 140 ; de la même manière, le serveur 130 informe le dispositif gestionnaire de connectivité 140 lorsqu'une telle passerelle résidentielle a établi une connexion avec le serveur 130. D'autres méthodes de détection de connexion et déconnexion peuvent être mises en oeuvre, comme par exemple un mécanisme d'envoi régulier d'un message (*e*.*g*. de type Ping) de chaque passerelle résidentielle du système de communication de la Fig. 1 à destination du dispositif gestionnaire de connectivité 140.

Dans une étape 702 suivante, le dispositif gestionnaire de connectivité 140 sélectionne une passerelle résidentielle mère de remplacement temporaire pour chaque dispositif terminal qui était appairé à la passerelle résidentielle dont la déconnexion a été détectée à l'étape 701. L'utilisation d'une passerelle résidentielle mère de remplacement temporaire permet de limiter la quantité de messages remontés au serveur 130 en assurant qu'une passerelle résidentielle va tenter d'acquitter lesdits messages avant l'expiration de la temporisation précédemment décrite en relation avec la Fig. 3, notamment lorsque les passerelles résidentielles du système de communication de la Fig. 1 utilisent une même durée de temporisation.

Le dispositif gestionnaire de connectivité 140 sélectionne ladite passerelle résidentielle mère de remplacement temporaire en utilisant la cartographie de transmission disponible avant la détection de déconnexion. En effet, la cartographie de transmission indique quelles sont les passerelles résidentielles qui peuvent être atteintes par les dispositifs terminaux qui étaient appairés avec la passerelle résidentielle qui a été déconnectée. Le dispositif gestionnaire de connectivité 140 sélectionne ladite passerelle résidentielle mère de remplacement temporaire parmi les passerelles résidentielles qui peuvent être atteintes par lesdits dispositifs terminaux d'après ladite cartographie de transmission.

Le dispositif gestionnaire de connectivité 140 sélectionne ladite passerelle résidentielle mère de remplacement temporaire en utilisant un critère supplémentaire. Par exemple, le dispositif gestionnaire de connectivité 140 sélectionne ladite passerelle résidentielle mère de remplacement temporaire en utilisant en outre une information, en provenance du serveur 130, indiquant pour chaque dispositif terminal concerné quelle passerelle résidentielle relaie le plus de messages à la place de la passerelle résidentielle mère qui a été déconnectée. Le dispositif gestionnaire de connectivité 140 peut ainsi sélectionner une passerelle résidentielle mère de remplacement temporaire différente d'un dispositif terminal concerné à l'autre.

Dans une étape 703 suivante, le dispositif gestionnaire de connectivité 140 envoie à la passerelle résidentielle mère de remplacement temporaire sélectionnée à l'étape 702 une notification selon laquelle ladite passerelle résidentielle prend le rôle de passerelle résidentielle mère de remplacement temporaire pour les dispositifs terminaux qui étaient préalablement appairés avec la passerelle mère déconnectée. La notification inclut une identification desdits dispositifs terminaux. Lesdits dispositifs terminaux sont alors appairés avec ladite passerelle résidentielle mère de remplacement temporaire jusqu'à ce que la passerelle résidentielle qui a été déconnectée soit reconnectée au sein du système de communication de la Fig. 1, tel que décrit ci-après en relation avec la Fig. 8. Il est ensuite mis fin à l'algorithme de la Fig. 7.

La Fig. 8 illustre schématiquement un algorithme, mis en oeuvre par le dispositif gestionnaire de connectivité 140, pour annuler un appairage temporaire entre au moins un dispositif terminal et une passerelle résidentielle du système de communication de la Fig. 1.

Dans une étape 801, le dispositif gestionnaire de connectivité 140 détecte une reconnexion d'une passerelle résidentielle au sein du système de communication de la Fig. 1. Le dispositif gestionnaire de connectivité 140 peut en être informé par le serveur 130 ou par une réception de messages de la part de ladite passerelle résidentielle.

Dans une étape 802 suivante, le dispositif gestionnaire de connectivité 140 envoie, à la passerelle résidentielle mère de remplacement temporaire qui a été sélectionnée suite à la détection de déconnexion de ladite passerelle résidentielle, une notification selon laquelle ladite passerelle résidentielle mère de remplacement temporaire abandonne le rôle de passerelle résidentielle mère de remplacement temporaire pour les dispositifs terminaux qui étaient préalablement appairés avec la passerelle mère reconnectée. La notification inclut une identification desdits dispositifs terminaux. L'appairage temporaire avec ladite passerelle résidentielle mère de remplacement temporaire prend donc fin. Il est ensuite mis fin à l'algorithme de la Fig. 8.

Il convient de noter que tous les dispositifs terminaux du système de communication n'ont pas besoin d'être appairés. En effet, plusieurs types de dispositif terminal peuvent coexister dans le système de communication. Il peut y avoir des dispositifs terminaux fixes, comme des capteurs au sein d'une habitation. De tels dispositifs terminaux sont typiquement appairés avec une passerelle résidentielle installée au sein de l'habitation, les passerelles résidentielles du voisinage de l'habitation pouvant assurer la fonction de relais pour le compte de ladite passerelle résidentielle en cas de défaillance dans la chaîne de communication entre lesdits dispositifs terminaux et le serveur 130 via ladite passerelle résidentielle. Il peut aussi y avoir des dispositifs terminaux mobiles, qui ne vont que temporairement se trouver à portée de communication de telle ou telle passerelle résidentielle. De tels dispositifs terminaux ne sont typiquement pas appairés avec une passerelle résidentielle du système de communication de la Fig. 1. Dans ce cas, au moins une passerelle résidentielle à portée de communication du dispositif terminal mobile au moment où ledit dispositif terminal mobile émet un message à destination du serveur 130 va relayer ledit message et émettre un acquittement une fois que la temporisation précédemment décrite en relation avec la Fig. 3 est parvenue à expiration. Il se peut alors que plusieurs passerelles résidentielles relaient un même message vers le serveur 130 créant ainsi une redondance d'informations ; le service de collecte est alors assuré, au détriment d'une optimisation côté accès radio et côté réseau de connexion avec le serveur 130. Cette redondance d'informations peut toutefois être bénéfique vis-à-vis des dispositifs terminaux mobiles en permettant d'offrir un service d'estimation de géolocalisation desdits dispositifs terminaux mobiles en connaissant la position géographique des passerelles résidentielles concernées.

Il convient aussi de noter que le système de communication de la Fig. 1 peut être installé en complément d'une infrastructure de collecte à base de passerelles fixes et permanentes disposées sur des points géographiquement hauts, notamment pour couvrir des zones blanches délaissées par ladite infrastructure de collecte. Dans ce cas, un message émis par un dispositif terminal mobile se trouvant dans une zone géographique couverte par ladite infrastructure de collecte entraîne un acquittement de la part d'une passerelle de collecte de ladite infrastructure. Les passerelles résidentielles à portée de communication dudit dispositif terminal mobile détectent cet acquittement avant l'expiration de la temporisation précédemment décrite en relation avec la Fig. 3 et ne relaient pas le message. Si ledit dispositif terminal mobile se trouve dans une zone blanche, au moins une passerelle résidentielle assure alors le relais du message vers le serveur de collecte. Lorsqu'un message est émis par un dispositif terminal fixe et appairé avec une passerelle résidentielle et que ledit dispositif terminal fixe se trouve dans une zone géographique couverte par ladite infrastructure de collecte, ledit message va être doublement acquitté et doublement relayé au serveur de collecte. Le serveur de collecte peut alors prévenir le dispositif gestionnaire de connectivité 140 de cette redondance et le dispositif gestionnaire de connectivité 140 peut alors annuler l'appairage dudit dispositif terminal fixe avec sa passerelle résidentielle mère de la même manière que le dispositif gestionnaire de connectivité 140 annule un appairage temporaire, tel que précédemment décrit en relation avec la Fig. 8.

## Revendications

1. Procédé de relais d'un message reçu par une passerelle résidentielle (122) en provenance d'un dispositif terminal (110 ; 111) par voie radio, ladite passerelle résidentielle faisant partie d'un système de communication comportant une pluralité de passerelles résidentielles (120, 121, 122, 123) connectées à un serveur (130) auquel est destiné ledit message, **caractérisé en ce que** ladite passerelle résidentielle effectue les étapes suivantes :
- déterminer (302) si ledit dispositif terminal a été préalablement appairé avec ladite passerelle résidentielle ;
- lorsque ledit dispositif terminal a été préalablement appairé avec ladite passerelle résidentielle, transmettre (308) par voie radio audit dispositif terminal un acquittement dudit message reçu et propager (307) ledit message reçu à destination dudit serveur ; et
- lorsque ledit dispositif terminal n'a pas été préalablement appairé avec ladite passerelle résidentielle, activer (303) une temporisation de durée prédéterminée à l'issue de laquelle, lorsqu'aucun acquittement dudit message par voie radio n'a été détecté, ladite passerelle résidentielle transmet (308) par voie radio audit dispositif terminal un acquittement dudit message reçu et propage (307) ledit message reçu à destination dudit serveur.

2. Procédé selon la revendication 1, **caractérisé en ce que** ladite passerelle résidentielle détermine aléatoirement la durée de ladite temporisation entre une borne inférieure et une borne supérieure, la borne inférieure définissant un laps de temps théorique maximum entre la réception par une passerelle résidentielle d'un message généré par un dispositif terminal et la transmission d'un acquittement dudit message par la passerelle résidentielle avec laquelle ledit dispositif terminal est appairé, la borne supérieure définissant un laps de temps théorique maximum entre la réception par une passerelle résidentielle d'un message généré par un dispositif terminal et la transmission d'un acquittement dudit message par une passerelle résidentielle avec laquelle ledit dispositif terminal n'est pas appairé.

3. Procédé selon l'une quelconque des revendications 1 et 2, **caractérisé en ce que** ladite passerelle résidentielle initie (401) une procédure d'envoi de sondes comportant les étapes suivantes :
- sélectionner (402) un jeu de paramètres de transmission par voie radio parmi un ensemble prédéfini de jeux de paramètres de transmission par voie radio ;
- effectuer (403) un envoi d'au moins une sonde en utilisant ledit jeu de paramètres de transmission sélectionné ; et
- réitérer (404) l'envoi en utilisant un autre jeu de paramètres, jusqu'à ce que tout l'ensemble de jeux de paramètres de transmission par voie radio ait été utilisé, ou jusqu'à ce qu'un dispositif (140) gestionnaire de connectivité n'interrompe ladite procédure d'envoi de sondes.

4. Procédé selon la revendication 3, **caractérisé en ce que** ladite passerelle résidentielle déclenche la procédure d'envoi de sondes suite à une instruction en provenance d'un dispositif (140) gestionnaire de connectivité du système de communication, ou **en ce que** ladite passerelle résidentielle déclenche périodiquement la procédure d'envoi de sondes, ou ladite passerelle résidentielle déclenche la procédure d'envoi de sondes suite à une phase de connexion de ladite passerelle résidentielle au serveur.

5. Procédé selon l'une quelconque des revendications 3 et 4, **caractérisé en ce que**, suite à la procédure d'envoi de sondes, ladite passerelle résidentielle reçoit (405) des paramètres de transmission par voie radio à faire appliquer à chaque dispositif terminal appairé à ladite passerelle résidentielle pour transmettre par voie radio des messages à destination dudit serveur.

6. Procédé selon l'une quelconque des revendications 3 à 5, **caractérisé en ce que** lesdits paramètres de transmission par voie radio sont des paramètres de puissance d'émission et/ou de facteur d'étalement.

7. Procédé selon l'une quelconque des revendications 3 à 6, **caractérisé en ce que**, suite à une réception de sonde, ladite passerelle résidentielle effectue les étapes suivantes :
- déterminer (502) une qualité de réception de ladite sonde ;
- déterminer des paramètres de transmission par voie radio qui ont été utilisés pour transmettre ladite sonde ; et
- transmettre (503) à un dispositif (140) gestionnaire de connectivité du système de communication, un rapport de qualité de transmission incluant des informations représentatives de la qualité de réception de ladite sonde et des paramètres de transmission par voie radio qui ont été utilisés pour transmettre ladite sonde.

8. Procédé selon la revendication 7, **caractérisé en ce que**, sur réception (601) de rapports de qualité de transmission, le dispositif gestionnaire de connectivité du système de communication effectue les étapes suivantes :
- déterminer (602) quel jeu de paramètres de transmission par voie radio utilisés par une passerelle résidentielle dans le cadre d'une procédure d'envoi de sondes permet à ladite passerelle résidentielle de communiquer avec un nombre d'autres passerelles résidentielles supérieur et au plus proche d'un nombre prédéfini de passerelles résidentielles ; et
- transmettre (604) à ladite passerelle résidentielle le jeu déterminé de paramètres de transmission par voie radio de sorte à faire appliquer ledit jeu de paramètres à chaque dispositif terminal appairé avec ladite passerelle résidentielle.

9. Procédé selon la revendication 8, **caractérisé en ce que** le dispositif gestionnaire de connectivité du système de communication détermine (603) une cartographie de transmission représentative et **en ce que**, sur détection (701) d'une déconnexion d'une passerelle résidentielle du système de communication, le dispositif gestionnaire de connectivité du système de communication effectue les étapes suivantes :
- sélectionner (702), d'après la cartographie de transmission, une passerelle résidentielle de remplacement temporaire pour remplacer temporairement en termes d'appairage ladite passerelle résidentielle déconnectée avec au moins un dispositif terminal déterminé ; et
- informer (703) ladite passerelle résidentielle de remplacement temporaire de l'appairage temporaire avec chaque dispositif terminal déterminé.

10. Procédé selon la revendication 9, **caractérisé en ce que**, sur détection (801) d'une reconnexion au sein du système de communication de la passerelle résidentielle précédemment déconnectée, le dispositif gestionnaire de connectivité du système de communication annule l'appairage temporaire et en informe (802) ladite passerelle résidentielle de remplacement temporaire.

11. Programme d'ordinateur, **caractérisé en ce qu'**il comprend des instructions pour mettre en oeuvre, par une passerelle résidentielle, le procédé selon l'une quelconque des revendications 1 à 7, lorsque ledit programme est exécuté par un processeur de ladite passerelle résidentielle.

12. Moyens de stockage, **caractérisés en ce qu'**ils stockent un programme d'ordinateur comprenant des instructions pour mettre en oeuvre, par une passerelle résidentielle, le procédé selon l'une quelconque des revendications 1 à 7, lorsque ledit programme est exécuté par un processeur de ladite passerelle résidentielle.

13. Passerelle résidentielle (122) adaptée pour agir comme relais d'un message reçu en provenance d'un dispositif terminal (110 ; 111) par voie radio, ladite passerelle résidentielle étant destinée à faire partie d'un système de communication comportant une pluralité de passerelles résidentielles (120, 121, 122, 123) connectées à un serveur (130) auquel est destiné ledit message, **caractérisé en ce que** ladite passerelle résidentielle comporte :
- des premiers moyens pour déterminer (302) si ledit dispositif terminal a été préalablement appairé avec ladite passerelle résidentielle ;
- des seconds moyens pour transmettre (308) par voie radio audit dispositif terminal un acquittement dudit message reçu et propager (307) ledit message reçu à destination dudit serveur ; et
- des troisièmes moyens pour activer (303) une temporisation de durée prédéterminée sur réception dudit message ;
et **en ce que** lesdits troisièmes moyens sont activés lorsque ledit dispositif terminal n'a pas été préalablement appairé avec ladite passerelle résidentielle,
et **en ce que** lesdits seconds moyens sont activés lorsque ledit dispositif terminal a été préalablement appairé avec ladite passerelle résidentielle, et aussi lorsqu'aucun acquittement dudit message par voie radio n'a été détecté à l'issue de ladite temporisation.

## Patentansprüche

1. Verfahren zum Weiterleiten einer Nachricht, die von einem Heim-Gateway (122) empfangen wird und von einer Endgerätvorrichtung (110; 111) stammt, auf dem Funkweg, wobei das Heim-Gateway einen Teil eines Kommunikationssystems bildet, das mehrere Heim-Gateways (120, 121, 122, 123) umfasst, die mit einem Server (130) verbunden sind, für den die Nachricht bestimmt ist, **dadurch gekennzeichnet, dass** das Heim-Gateway die folgenden Schritte ausführt:
- Bestimmen (302), ob die Endgerätvorrichtung mit dem Heim-Gateway im Voraus gepaart worden ist;
- dann, wenn die Endgerätvorrichtung im Voraus mit dem Heim-Gateway gepaart worden ist, Übertragen (308) auf dem Funkweg an die Endgerätvorrichtung einer Quittierung der empfangenen Nachricht und Leiten (307) der empfangenen Nachricht zu dem Server; und
- dann, wenn die Endgerätvorrichtung nicht im Voraus mit dem Heim-Gateway gepaart worden ist, Aktivieren (303) einer Verzögerung mit vorgegebener Dauer, an deren Ende dann, wenn keine Quittierung der Nachricht auf dem Funkweg detektiert worden ist, das Heim-Gateway (308) auf dem Funkweg an die Endgerätvorrichtung eine Quittierung der empfangenen Nachricht überträgt und die empfangene Nachricht zu dem Server leitet (307).

2. Verfahren Anspruch 1, **dadurch gekennzeichnet, dass** das Heim-Gateway die Dauer der Verzögerung zwischen einer unteren Grenze und einer oberen Grenze auf zufällige Weise bestimmt, wobei die untere Grenze eine maximale theoretische Zeitdauer zwischen dem Empfang durch ein Heim-Gateway einer Nachricht, die von einer Endgerätvorrichtung erzeugt wird, und der Übertragung einer Quittierung der Nachricht durch das Heim-Gateway, mit dem die Endgerätvorrichtung gepaart ist, definiert und wobei die obere Grenze eine maximale theoretische Zeitdauer zwischen dem Empfang durch ein Heim-Gateway einer Nachricht, die durch eine Endgerätvorrichtung erzeugt wird, und der Übertragung einer Quittierung der Nachricht durch ein Heim-Gateway, mit dem die Endgerätvorrichtung nicht gepaart ist, definiert.

3. Verfahren nach einem der Ansprüche 1 und 2, **dadurch gekennzeichnet, dass** das Heim-Gateway (401) eine Prozedur zum Schicken von Sonden beginnt, die die folgenden Schritte umfasst:
- Auswählen (402) eines Satzes von Parametern für die Übertragung auf dem Funkweg aus einer im Voraus definierten Gesamtheit von Sätzen von Parametern für die Übertragung auf dem Funkweg;
- Ausführen (403) eines Schickens wenigstens einer Sonde unter Verwendung des ausgewählten Satzes von Übertragungsparametern; und
- Wiederholen (404) des Schickens unter Verwendung eines weiteren Satzes von Parametern, bis jede Gesamtheit von Sätzen von Parametern für die Übertragung auf dem Funkweg verwendet worden ist oder bis eine Konnektivitäts-Steuervorrichtung (140) die Prozedur des Schickens von Sonden unterbricht.

4. Verfahren Anspruch 3, **dadurch gekennzeichnet, dass** das Heim-Gateway die Prozedur des Schickens von Sonden als Folge eines Befehls von einer Konnektivitäts-Steuervorrichtung (140) des Kommunikationssystems auslöst oder dass das Heim-Gateway die Prozedur des Schickens von Sonden periodisch auslöst oder dass das Heim-Gateway die Prozedur des Schickens von Sonden als Folge einer Phase des Verbindens des Heim-Gateways mit dem Server auslöst.

5. Verfahren nach einem der Ansprüche 3 und 4, **dadurch gekennzeichnet, dass** als Folge der Prozedur des Schickens von Sonden das Heim-Gateway Parameter für die Übertragung auf dem Funkweg empfängt (405), die auf jede Endgerätvorrichtung anzuwenden sind, die mit dem Heim-Gateway gepaart ist, um Nachrichten auf dem Funkweg an den Server zu übertragen.

6. Verfahren nach einem der Ansprüche 3 bis 5, **dadurch gekennzeichnet, dass** die Parameter für die Übertragung auf dem Funkweg Parameter der Sendeleistung und/oder des Spreizungsfaktors sind.

7. Verfahren nach einem der Ansprüche 3 bis 6, **dadurch gekennzeichnet, dass** das Heim-Gateway als Folge des Empfangs einer Sonde die folgenden Schritte ausführt:
- Bestimmen (502) einer Empfangsqualität der Sonde;
- Bestimmen von Parametern für die Übertragung auf dem Funkweg, die verwendet worden sind, um die Sonde zu übertragen; und
- Übertragen (503) an eine Konnektivitäts-Steuervorrichtung (140) des Kommunikationssystems eines Berichts über die Qualität der Übertragung, der Informationen enthält, die die Empfangsqualität der Sonde und Parameter für die Übertragung auf dem Funkweg, die verwendet worden sind, um die Sonde zu übertragen, repräsentieren.

8. Verfahren nach Anspruch 7, **dadurch gekennzeichnet, dass** beim Empfang (601) von Berichten über die Qualität der Übertragung die Konnektivitäts-Steuervorrichtung des Kommunikationssystems die folgenden Schritte ausführt:
- Bestimmen (602), welcher Satz von Parametern für die Übertragung auf dem Funkweg, die von einem Heim-Gateway im Rahmen einer Prozedur des Schickens von Sonden verwendet worden sind, dem Heim-Gateway ermöglicht, mit einer Anzahl anderer Heim-Gateways, die größer als eine im Voraus definierte Anzahl von Heim-Gateways ist und dieser so nahe wie möglich kommt, zu kommunizieren; und
- Übertragen (604) an das Heim-Gateway des bestimmten Satzes von Parametern für die Übertragung auf dem Funkweg, derart, dass der Parametersatz auf jede Endgerätvorrichtung angewendet wird, die mit dem Heim-Gateway gepaart ist.

9. Verfahren nach Anspruch 8, **dadurch gekennzeichnet, dass** die Konnektivitäts-Steuervorrichtung des Kommunikationssystems eine repräsentative Kartographie der Übertragung bestimmt (603) und das bei Detektion (701) einer Trennung des Heim-Gateways von dem Kommunikationssystem die Konnektivitäts-Steuervorrichtung des Kommunikationssystems die folgenden Schritte ausführt:
- Auswählen (702) nach der Kartographie der Übertragung eines Heim-Gateways für die vorübergehende Ersetzung, um das getrennte Heim-Gateway im Hinblick auf die Paarung mit wenigstens einer bestimmten Endgerätvorrichtung vorübergehend zu ersetzen; und
- Informieren (703) des Heim-Gateways für die vorübergehende Ersetzung über die vorübergehende Paarung mit jeder bestimmten Endgerätvorrichtung.

10. Verfahren nach Anspruch 9, **dadurch gekennzeichnet, dass** bei Detektion (801) einer erneuten Verbindung in dem Kommunikationssystem des vorher getrennten Heim-Gateways die Konnektivitäts-Steuervorrichtung des Kommunikationssystems die vorübergehende Paarung annulliert und das Heim-Gateway für vorübergehende Ersetzung darüber informiert (802).

11. Computerprogramm, **dadurch gekennzeichnet, dass** es Befehle umfasst, um durch ein Heim-Gateway das Verfahren nach einem der Ansprüche 1 bis 7 auszuführen, wenn das Programm von einem Prozessor des Heim-Gateways abgearbeitet wird.

12. Speichermittel, **dadurch gekennzeichnet, dass** sie ein Computerprogramm speichern, das Befehle enthält, um durch ein Heim-Gateway das Verfahren nach einem der Ansprüche 1 bis 7 auszuführen, wenn das Programm durch einen Prozessor des Heim-Gateways abgearbeitet wird.

13. Heim-Gateway (122), das dafür ausgelegt ist, als Weiterleitungseinrichtung für eine empfangene Nachricht von einer Endgerätvorrichtung (110; 111) auf dem Funkweg zu wirken, wobei das Heim-Gateway dazu bestimmt ist, einen Teil eines Kommunikationssystems zu bilden, das mehrere Heim-Gateways (120, 121, 122, 123) umfasst, die mit einem Server (130) verbunden sind, für die die Nachricht bestimmt ist, **dadurch gekennzeichnet, dass** das Heim-Gateway Folgendes umfasst:
- erste Mittel zum Bestimmen (302), ob die Endgerätvorrichtung im Voraus mit dem Heim-Gateway gepaart worden ist;
- zweite Mittel zum Übertragen (308) auf dem Funkweg an die Endgerätvorrichtung einer Quittierung der empfangenen Nachricht und Leiten (307) der empfangenen Nachricht zu dem Server; und
- dritte Mittel zum Aktivieren (303) einer Verzögerung mit vorgegebener Dauer des Empfangs der Nachricht;
und dass die dritten Mittel aktiviert werden, wenn die Endgerätvorrichtung nicht im Voraus mit dem Heim-Gateway gepaart worden ist,
und dass die zweiten Mittel aktiviert werden, wenn die Endgerätvorrichtung im Voraus mit dem Heim-Gateway gepaart worden ist, und außerdem dann, wenn keine Quittierung der Nachricht auf dem Funkweg am Ende der Verzögerung detektiert worden ist.

## Claims

1. Method for relaying a message wirelessly received by a residential gateway (122) from a terminal device (110; 111), said residential gateway forming part of a communication system comprising a plurality of residential gateways (120, 121, 122, 123) connected to a server (131) for which said message is intended, **characterised in that** said residential gateway performs the following steps:
- determining (302) whether said terminal device has previously been paired with said residential gateway;
- when said terminal device has previously been paired with said residential gateway, wirelessly transmitting (308) to said terminal device an acknowledgement of said received message and propagating (307) said received message to said server; and
- when said terminal device has not previously been paired with said residential gateway, activating (303) a timer of predetermined duration at the end of which, when no wirelessly-transmitted acknowledgement of said message has been detected, said residential gateway wirelessly transmits (308) to said terminal device an acknowledgement of said received message and propagates (307) said received message to said server.

2. Method according to claim 1, **characterised in that** said residential gateway randomly determines the duration of said timer between a lower bound and an upper bound, the lower bound defining a maximum theoretical lapse of time between the reception by a residential gateway of a message generated by a terminal device and the transmission of an acknowledgement of said message by the residential gateway with which said terminal device is paired, the upper bound defining a maximum theoretical lapse of time between the reception by a residential gateway of a message generated by a terminal device and the transmission of an acknowledgement of said message by a residential gateway with which said terminal device is not paired.

3. Method according to any one of claims 1 and 2, **characterised in that** said residential gateway initiates (401) a procedure of sending probes comprising the following steps:
- selecting (402) a set of radio transmission parameters from a predefined collection of sets of radio transmission parameters;
- performing (403) a sending of at least one probe using said selected set of transmission parameters; and
- reiterating (404) the sending using another set of parameters, until the entire collection of sets of radio transmission parameters has been used, or until a connectivity management device (140) interrupts said procedure of sending probes.

4. Method according to claim 3, **characterised in that** said residential gateway triggers the procedure of sending probes following an instruction coming from a connectivity management device (140) of the communication system, or **in that** said residential gateway periodically triggers the procedure of sending probes, or said residential gateway triggers the procedure of sending probes following a phase of connection of said residential gateway to the server.

5. Method according to any one of claims 3 and 4, **characterised in that**, following the procedure of sending probes, said residential gateway receives (405) radio transmission parameters to be enforced to each terminal device paired with said residential gateway for wirelessly transmitting messages intended for said server.

6. Method according to any one of claims 3 to 5, **characterised in that** said radio transmission parameters are transmit-power and/or spreading-factor parameters.

7. Method according to any one of claims 3 to 6, **characterised in that**, following reception of a probe, said residential gateway performs the following steps:
- determining (502) quality of reception of said probe;
- determining radio transmission parameters that have been used to transmit said probe; and
- transmitting (503), to a connectivity management device (104) of the communication system, a transmission quality report including information representing the quality of reception of said probe and radio transmission parameters that have been used to transmit said probe.

8. Method according to claim 7, **characterised in that**, upon reception (601) of transmission quality reports, the connectivity management device of the communication system performs the following steps:
- determining (602) which set of radio transmission parameters used by a residential gateway in the context of a procedure of sending probes enables said residential gateway to communicate with a number of other residential gateways higher than and as close as possible to a predefined number of residential gateways; and
- transmitting (604) to said residential gateway the determined set of radio transmission parameters so as to enforce said set of parameters to each terminal device paired with said residential gateway.

9. Method according to claim 8, **characterised in that** the connectivity management device of the communication system determines (603) a representative transmission map and **in that**, upon detection (701) of a disconnection of a residential gateway from the communication system, the connectivity management device of the communication system performs the following steps:
- selecting (702), according to the transmission map, a temporary replacement residential gateway for temporarily replacing, in terms of pairing, said disconnected residential gateway with at least one determined terminal device; and
- informing (703) said temporary replacement residential gateway of the temporary pairing with each determined terminal device.

10. Method according to claim 8, **characterised in that**, upon detection (801) of a reconnection to the communication system of the previously disconnected residential gateway, the connectivity management device of the communication system cancels the temporary pairing and informs (802) said temporary replacement residential gateway thereof.

11. Computer program, **characterised in that** it comprises instructions for implementation, by a residential gateway, of the method according to any one of claims 1 to 7, when said program is executed by a processor of said residential gateway.

12. Storage means, **characterised in that** they store a computer program comprising instructions for the implementation, by a residential gateway, of the method according to any one of claims 1 to 7, when said program is executed by a processor of said residential gateway.

13. Residential gateway (122) adapted for acting as a relay of a wirelessly received message from a terminal device (110; 111), said residential gateway being intended to form part of a communication system comprising a plurality of residential gateways (120, 121, 122, 123) connected to a server (130) for which said message is intended, **characterised in that** said residential gateway comprises:
- first means for determining (302) whether said terminal device has previously been paired with said residential gateway;
- second means for wirelessly transmitting (308) to said terminal device a wirelessly-transmitted acknowledgement of said received message and propagating (307) said received message to said server; and
- third means for activating (303) a timer of predetermined duration upon reception of said message;
and **in that** said third means are activated when said terminal device has not previously been paired with said residential gateway,
and **in that** said second means are activated when said terminal device has previously been paired with said residential gateway, and further when no wirelessly-transmitted acknowledgement of said message has been detected at the end of said timer.
